# FASCICULE DE BREVET EUROPEEN

(11) **EP 2 952 323 B1**
(45) Date de publication et mention de la délivrance du brevet: **07.08.2019**
(21) Numéro de dépôt: 15167317.5
(22) Date de dépôt: 12.05.2015
(51) Int. Cl.: B29C 45/27, B29C 33/00

(54) **SYSTÈME DE MOULAGE PAR INJECTION**
VORRICHTUNG FÜR SPRITZGIESSWERKZEUGE
INJECTION MOULDING SYSTEM

(30) Priorité: 05.06.2014 FR 1455113
(43) Date de publication de la demande: 09.12.2015
(73) Titulaire: CEMA Technologies, 72100 Le Mans (FR)
(72) Inventeur: Bouilloud, Marc, 72200 La Flèche (FR); Fillette, Pierre-Olivier, 72100 Le Mans (FR)
(74) Mandataire: Laget, Jean-Loup

(56) Documents cités:
- US-A- 5 223 275
- "A Design Guide Part and Mold Design Engineering Polymers", , 30 décembre 2000 (2000-12-30), XP055136292, Extrait de l'Internet: URL:http://edge.rit.edu/content/P12056/pub lic/Part and Mold Design.pdf [extrait le 2014-08-25]

## Description

L'invention concerne un système de moulage par injection, et plus particulièrement un système de moulage par injection simultanée de matière plastique liquide dans plusieurs cavités moulantes, dans lequel chaque cavité moulante est alimentée en matière plastique liquide par un canal aboutissant au seuil d'injection dans la cavité.

Les systèmes de moulage de ce type sont bien connus et utilisés notamment pour le moulage, dans un même cycle d'injection, de plusieurs pièces plastiques ayant une fonction technique, par exemple dans un système de délivrance de produits pharmaceutiques sous forme liquide ou sous forme d'aérosol, ou dans un dispositif mécanique de comptage de doses.

Dans ces systèmes, le moule proprement dit est défini comme un moule multiempreinte, comportant une partie fixe et une partie mobile.

Une fois le moule fermé, l'injection de matière plastique liquide est effectuée en une seule fois pour toutes les cavités moulantes, ou empreintes. Usuellement, la matière plastique liquide arrive par une canalisation unique, qui se divise en canaux alimentant chacun une cavité moulante ou empreinte. La structure géométrique du réseau de canaux est de grande importance car elle doit assurer un équilibrage géométrique de l'alimentation des cavités moulantes en matière plastique liquide.

Lorsque le nombre d'empreintes est élevé, il est difficile de garantir une parfaite homogénéité des conditions d'injection de matière plastique liquide dans chaque empreinte.

En effet, dans les systèmes de moulage connus, les canaux d'alimentation en matière plastique liquide sont dimensionnés de façon à être rendus théoriquement identiques en termes de géométrie et de flux thermiques appliqués.

Cependant, malgré le coût lié au dimensionnement des canaux, l'équilibrage indispensable, pour avoir des pièces injectées de caractéristiques identiques, n'est généralement pas réalisé.

Lors d'une injection directe dans des cavités multiples, le déséquilibre de remplissage induit des disparités parfois critiques entre les différentes pièces issues d'une même opération de moulage.

Les causes de ces disparités sont multifactorielles et entraînent des écarts non répétables dans les caractéristiques des pièces moulées, comme par exemple, la densité, les dimensions ou les contraintes internes. Certaines de ces disparités peuvent être contrôlées sans test destructif, comme par exemple les dimensions des pièces, qui peuvent être mesurées.

Cependant, d'autres caractéristiques, comme le taux de contraintes internes, ne peuvent être déterminées que par la réalisation d'essais destructifs.

Par ailleurs, la plupart des systèmes d'injection peuvent générer une particule détachable au niveau du seuil d'injection lors de la découpe et l'éjection de la pièce moulée. Cette particule détachable est particulièrement préjudiciable au fonctionnement ou à la qualité d'un système de délivrance médicale.

A nouveau, les causes de ces particules sont généralement multi factorielles plus particulièrement pour les polymères tels que (PE, PP, PBT, PA...) qui ont des aptitudes au « filage » et ont des apparitions non répétables mais réelles.

Le document US 5 223 275 décrit un système de moulage par injection simultanée de matière plastique liquide dans plusieurs cavités moulantes, dans lequel chaque cavité moulante est alimentée en matière plastique liquide par un canal aboutissant au seuil d'injection dans la cavité moulante. Dans ce document, deux mélanges plastiques sont injectés successivement dans la cavité moulante au même seuil. A cet effet, un tube central assure l'admission d'un mélange plastique et un tube extérieur, coaxial, assure l'admission d'un autre mélange plastique. Une aiguille axiale à trois positions assure le contrôle de l'injection.

Dans sa première position, l'aiguille assure la fermeture du seuil et du tube central. Dans sa deuxième position, l'aiguille assure la fermeture du tube central et l'ouverture du seuil, ce qui autorise le mélange plastique du tube extérieur à pénétrer dans la cavité moulante. Dans sa troisième position, l'aiguille assure l'ouverture du tube central, ce qui autorise le mélange plastique du tube central à pénétrer dans la cavité moulante.

Avec ce système de moulage par injection, le dosage du mélange plastique contenu dans le tube extérieur doit être assuré par des moyens extérieurs, et la pression d'injection doit être contrôlée par des moyens extérieurs aussi bien pour le tube central que pour le tube extérieur. Par ailleurs, avec un nombre d'injecteurs élevé, l'homogénéité des conditions d'injection de matière plastique liquide dans chaque empreinte n'est aucunement garantie.

Le document « A Design Guide Part and Mold Design Engineering Polymers » XP055136292 décrit des moyens d'atteindre des seuils d'injection qui ne sont pas localisés sur une surface de séparation du moule. Ces moyens sont guidés dans des tunnels non cylindriques et ont une certaine souplesse. Leurs déplacements ont lieu en dehors des phases d'injection et n'affectent pas la section de passage de la matière plastique liquide.

Un but de l'invention est de proposer un système de moulage par injection simultanée de matière plastique liquide dans plusieurs cavités moulantes qui augmente le taux de reproductibilité des propriétés des pièces issues de chacune des cavités moulantes, avec pour résultat l'augmentation de la répétabilité des pièces moulées.

Un autre but de l'invention est de proposer un système de moulage multiempreinte présentant un équilibrage des flux de matière plastique liquide assurant une plus grande homogénéité des pièces moulées.

Un autre but de l'invention est de proposer un système de moulage multiempreinte dans lequel les difficultés d'équilibrage des canaux d'alimentation en matière plastique liquide soient restreintes.

Un autre but de l'invention est de proposer un système de moulage multiempreinte assurant une augmentation de la qualité intrinsèque des pièces moulées et une diminution du risque d'hétérogénéité entres pièces d'une même opération de moulage.

Un autre but de l'invention est de proposer un système d'injection qui diminue le risque de particules détachables en permettant le contrôle optimal de la température et de l'équilibrage au plus près des seuils d'injection.

L'invention résout le problème susmentionné grâce au système décrit dans la revendication 1.

Avantageusement, la restriction est située à proximité du seuil d'injection dans la cavité moulante.

De manière avantageuse, la restriction est disposée dans un insert.

Avantageusement, l'insert comporte un passage axial de forme tronconique, avec la restriction à une extrémité de l'insert.

De manière avantageuse, l'insert comporte un passage axial de forme bi-tronconique, avec la restriction au point d'inversion de la conicité.

Avantageusement, l'insert comporte un passage axial dont la restriction est contrôlée au moyen d'un pointeau à position réglable.

De manière avantageuse, le pointeau est déplaçable axialement dans le passage axial.

Avantageusement, le pointeau est déplaçable perpendiculairement à l'axe du passage axial.

De préférence, l'insert comportant la restriction est en forme de tuyère.

D'autres caractéristiques et avantages de l'invention ressortent de la description qui suit faite avec référence aux dessins annexés dans lesquels :
- La figure 1 est une vue schématique en coupe d'un exemple de réalisation d'un système d'injection de matière plastique liquide dans une cavité moulante, ou empreinte, d'un système de moulage selon l'invention ;
- Les figures 2a à 2c sont des vues en coupe axiale d'exemples de réalisation d'inserts pour le système d'injection de la figure 1 ;
- La figure 3 est une vue en coupe d'un exemple de réalisation d'un pointeau de réglage de la restriction selon l'invention.
- La figure 4 est une vue en coupe d'un exemple de réalisation d'une tuyère en bout d'insert.

Schématiquement, un système de moulage par injection comporte un moule constitué d'une partie fixe 1 et d'une partie mobile 2, et un bloc 3 de transfert de matière plastique liquide. Dans le moule est disposée une cavité moulante ou empreinte 4, recevant la matière plastique liquide par un seuil d'injection 5.

Un moule multiempreinte comporte plusieurs cavités moulantes ou empreintes telles que 4, présentant chacune au moins un seuil d'injection 5.

Le bloc 3 de transfert de matière plastique liquide comporte un réseau de canaux 6, alimentés en matière plastique liquide par une arrivée 7. Chaque seuil d'injection de cavité moulante 4 est alimenté par un canal 6.

Dans le cas d'un moule à 128 empreintes, il y a donc au moins 128 canaux 6 répartis dans le bloc 3.

Selon l'invention, à proximité du seuil d'injection 5 de chaque empreinte 4 est disposée dans chaque canal 6, une restriction 8 à l'écoulement de la matière plastique liquide. Cette restriction 8 se présente comme une diminution de la section du canal 6, et entraîne une perte de charge lors du passage de la matière plastique liquide dans la restriction 8.

La restriction 8 doit être positionnée en amont du seuil d'injection (5), dans une zone où la matière plastique liquide reste dans un état de fluidité optimal. Par comparaison, au seuil d'injection 5 d'une empreinte 4, la matière plastique liquide a tendance à se solidifier entre deux cycles d'injection pour former une goutte froide.

La perte de charge subie par la matière plastique liquide lors de son passage dans la restriction doit être supérieure à la somme de la perte de charge créée par la goutte froide et de la perte de charge relative à la distance d'écoulement entre la restriction et le seuil d'injection. En d'autres termes, la perte de charge relative à la restriction doit être supérieure à la somme des pertes de charges existant entre la restriction et la cavité moulante. La distance d'écoulement entre la restriction et le seuil d'injection devra être optimisée pour limiter la perte de charge liée au franchissement de cette distance.

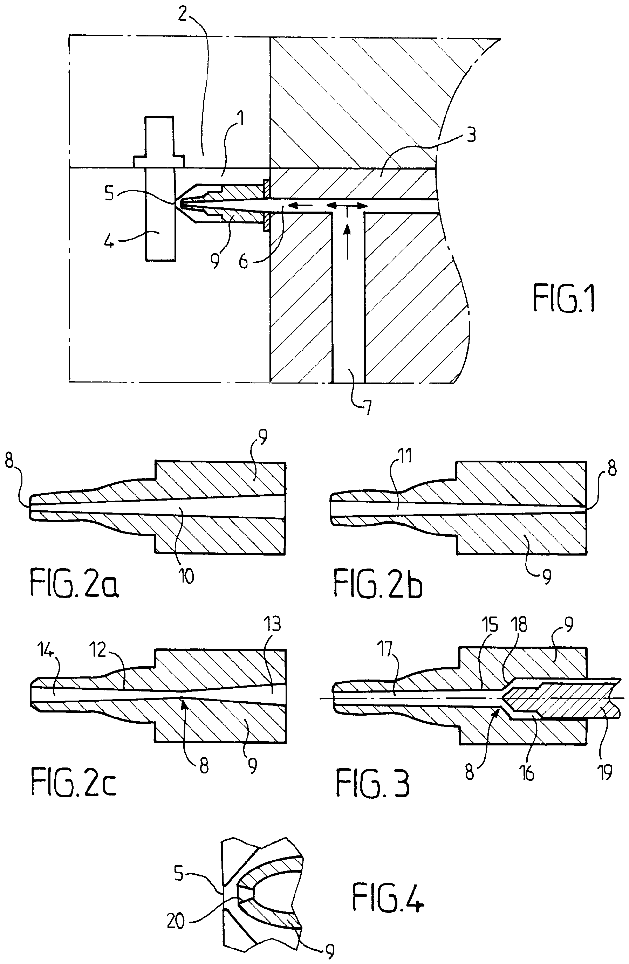

La restriction 8 est réalisée au moyen d'un insert 9 placé au voisinage du seuil d'injection 5, et présentant un passage axial. Dans l'exemple de la figure 2a, le passage axial 10 est tronconique, la grande base du tronc de cône étant située en amont, et alimentée par le canal 6, la petite base correspondant à la restriction 8 étant en aval, proche du seuil d'injection 5. Dans le sens d'écoulement de la matière plastique liquide, la restriction 8 est associée à une réduction progressive de la section du canal en amont de la restriction.

Dans l'exemple de la figure 2b, le passage axial 11 est tronconique, et la restriction 8 est placée en amont et suivie, dans le sens d'écoulement, par un élargissement progressif de la section de passage.

Dans la figure 2c, le passage axial 12 est bi-tronconique, la restriction 8 est située sensiblement au milieu de l'insert 9, au point d'inversion de la conicité. La partie tronconique 13 d'entrée, en amont de la restriction 8, correspond à une réduction progressive de la section de passage. La partie tronconique 14 de sortie, en aval de la restriction 8, correspond à une augmentation progressive de la section de passage.

Dans l'exemple de réalisation de la figure 3, le passage axial 15 de l'insert 9 comporte une partie d'entrée 16 et une partie de sortie 17. Le diamètre de la partie d'entrée 16 est plus grand que celui de la partie de sortie 17. Le raccordement des deux parties 16 et 17 est assuré par un tronc de cône 18 jouant le rôle de siège pour le pointeau 19 disposé dans la partie d'entrée 16. Le pointeau 19 est à position axiale réglable pour contrôler la restriction 8 proprement dite. Le réglage de la position du pointeau 19 est assuré par tout moyen connu, mécanique, hydraulique, pneumatique, électrique, magnétique, commandé par microprocesseur, par exemple.

Selon un autre mode de réalisation non représenté, le passage axial 15 est cylindrique et le pointeau 19 est disposé perpendiculairement à l'axe du passage 15, pour contrôler la restriction 8. La disposition d'un pointeau à position réglable sur chaque canal d'alimentation en matière plastique liquide d'une cavité moulante ou empreinte, permet d'assurer le remplissage optimal des empreintes.

La position de chaque pointeau est commandée par microprocesseur pour réaliser un équilibrage des pressions d'alimentation des empreintes.

Dans l'exemple de la figure 4, l'insert se termine en tuyère 20 afin d'arriver au plus près du seuil d'injection dans le but d'empêcher le gel du seuil. Dans le cas d'un rajout de tuyère en bout d'insert, la restriction sera généralement réalisée juste avant la tuyère.

L'invention permet de s'affranchir des difficultés liées à l'obtention d'un équilibrage géométrique par les canaux d'alimentation en matière plastique liquide, dans le cas de moule multiempreinte.

Elle permet aussi d'offrir un moyen supplémentaire de réglage et de mise au point pour rendre compatible le système d'injection avec la matière utilisée, pour les empreintes concernées.

Avantageusement, l'insert se termine en forme de tuyère, permettant la maîtrise de la température et de la pression au seuil, de façon à diminuer les phénomènes de gel, tout en maintenant l'équilibrage dû à la restriction.

L'invention permet de contrôler la bonne réalisation de pièces moulées simultanément dans des empreintes de formes différentes.

L'invention permet d'obtenir une meilleure reproductibilité des performances d'un lot de pièces techniques issues d'un moule multiempreinte.

L'invention permet d'augmenter de façon sensible le nombre d'empreintes d'un moule car elle contrebalance le déséquilibre structurel lié à l'augmentation du nombre des empreintes.

L'invention permet de diminuer l'importance de l'équilibrage géométrique des canaux d'alimentation en matière plastique liquide, ce qui permet de simplifier le réseau des canaux et de réduire les temps et les coûts de réalisation du réseau.

L'invention assure une amélioration du taux d'équilibrage entre les empreintes d'un même moule et une réduction correspondante des défauts de fabrication des pièces.

## Revendications

1. Système de moulage par injection simultanée de matière plastique liquide dans plusieurs cavités moulantes, dans lequel chaque cavité moulante (4) est alimentée en matière plastique liquide par un canal (6) aboutissant au seuil (5) d'injection dans la cavité moulante (4), comportant dans chaque canal (6), en amont du seuil d'injection (5), un insert (9), comportant un passage axial (16, 17) dont la restriction (8), sous forme de réduction de la section du canal (6), est contrôlée au moyen d'un pointeau (19) à position réglable, pour assurer une perte de charge supérieure à la somme des pertes de charge existant entre ladite restriction (8) et la cavité moulante, **caractérisé en ce que** le passage axial est de forme bi-tronconique, avec la restriction (8) au point d'inversion de la conicité.

2. Système selon la revendication 1 **caractérisé en ce que** la restriction (8) est située à proximité du seuil (5) d'injection dans la cavité moulante (4).

3. Système selon la revendication 1 **caractérisé en ce que** le pointeau (19) est déplaçable axialement dans le passage axial.

4. Système selon la revendication 1 **caractérisé en ce que** le pointeau est déplaçable perpendiculairement à l'axe du passage axial.

5. Système selon la revendication 1 **caractérisé en ce que** l'insert (9) comportant la restriction est en forme de tuyère (20).

## Patentansprüche

1. System zum gleichzeitigen Spritzgießen von flüssigem Kunststoff in mehrere Gusshohlräume, wobei jeder Gusshohlraum (4) mit flüssigem Kunststoffmaterial durch einen Kanal (6) versorgt wird, der am Einspritzpunkt (5) in den Gusshohlraum (4) mündet, umfassend in jedem Kanal (6) vorgelagert vom Einspritzpunkt (5) einen Einsatz (9), umfassend einen axialen Durchgang (16, 17), dessen Beschränkung (8) in Form einer Reduzierung des Schnitts des Kanals (6) mit Hilfe eines Stempels (19) mit einstellbarer Position gesteuert wird, um einen Ladeverlust sicherzustellen, der größer als die Summe der Ladeverluste ist, die zwischen der Beschränkung (8) und dem Gusshohlraum existieren, **dadurch gekennzeichnet, dass** der axiale Durchgang eine doppelt kegelstumpfförmige Gestalt aufweist, wobei sich die Beschränkung (8) am Umkehrpunkt der Konizität befindet.

2. System nach Anspruch 1, **dadurch gekennzeichnet, dass** sich die Beschränkung (8) in der Nähe des Einspritzpunkts (5) im Gusshohlraum (4) befindet.

3. System nach Anspruch 1, **dadurch gekennzeichnet, dass** der Stempel (19) axial im axialen Durchgang verschoben werden kann.

4. System nach Anspruch 1, **dadurch gekennzeichnet, dass** der Stempel senkrecht zur Achse des axialen Durchgangs verschoben werden kann.

5. System nach Anspruch 1, **dadurch gekennzeichnet, dass** der Einsatz (9), der die Einschränkung umfasst, die Form einer Düse (20) aufweist.

## Claims

1. An injection molding system by simultaneous injection of liquid plastic material into several molding cavities, in which each molding cavity (4) is supplied with liquid plastic material by a channel (6) arriving at the injection threshold (5) into the molding cavity (4), including, in each channel (6), upstream from the injection threshold (5), an insert (9), including an axial passage (16, 17) whereof the restriction (8), in the form of a reduction of the section of the channel (6), is controlled using a needle (19) with an adjustable position, to provide a head loss greater than the sum of the head losses existing between said restriction (8) and the molding cavity, **characterized in that** the axial passage has a bi-truncated shape, with the restriction (8) at the inversion point of the taper.

2. The system according to claim 1, **characterized in that** the restriction (8) is located near the injection threshold (5) into the molding cavity (4).

3. The system according to claim 1, **characterized in that** the needle (19) is movable axially in the axial passage.

4. The system according to claim 1, **characterized in that** the needle is movable perpendicular to the axis of the axial passage.

5. The system according to claim 1, **characterized in that** the insert (9) including the restriction is in the form of a nozzle (20).
